# EUROPEAN PATENT APPLICATION

(11) **EP 4 282 929 A1**
(43) Date of publication of application: **29.11.2023**
(21) Application number: 23174910.2
(22) Date of filing: 23.05.2023
(51) Int. Cl.: C09J 7/38

(54) **DOUBLE-SIDED PRESSURE-SENSITIVE ADHESIVE SHEET**

(30) Priority: 24.05.2022 JP 2022084265
(71) Applicant: Nitto Denko Corporation, Ibaraki-shi Osaka 567-8680 (JP)
(72) Inventor: YAMAMOTO, Shuhei, Osaka, 567-8680 (JP); SAWAMURA, Amane, Osaka, 567-8680 (JP)
(74) Representative: Müller-Boré & Partner Patentanwälte PartG mbB

(57) **Abstract**

Provided is a double-sided pressure-sensitive adhesive sheet suitable for reducing the environmental load and thinning the double-sided pressure-sensitive adhesive sheet while ensuring a good appearance of the double-sided pressure-sensitive adhesive sheet.

The double-sided pressure-sensitive adhesive sheet X of the present invention includes a substrate film 10, pressure-sensitive adhesive layers 21 and 22, and a release liner 31. The substrate film 10 has a first surface 11 and a second surface 12 opposite the first surface 11. The pressure-sensitive adhesive layer 21 is disposed on the first surface 11, and has an adhesive surface 21a opposite the substrate film 10. The pressure-sensitive adhesive layer 22 is formed from a coating film of the pressure-sensitive adhesive composition applied on the second surface 12, and has an adhesive surface 22a opposite the substrate film 10. The release liner 31 is in releasable contact with the adhesive surface 21. The emission amount of toluene and ethyl acetate from the pressure-sensitive adhesive layer 21 on heating at 80°C for 30 minutes is 10 µg/g or less.

## Description

The present invention relates to a double-sided pressure-sensitive adhesive sheet.

A double-sided pressure-sensitive adhesive sheet includes, for example, a substrate film, a first pressure-sensitive adhesive layer on a one-side surface of the substrate film, and a second pressure-sensitive adhesive layer on the other-side surface of the substrate film. The double-sided pressure-sensitive adhesive sheet is, for example, used as a bonding material in a device such as a display panel. Such a double-sided pressure-sensitive adhesive sheet has conventionally been produced, for example, as follows.

First, a first pressure-sensitive adhesive layer is formed on a first release liner, and a second pressure-sensitive adhesive layer is formed on a second release liner. For the formation of each pressure-sensitive adhesive layer on the release liner, first, a pressure-sensitive adhesive composition is applied onto the release liner with a coater to form a coating film (applying step). The release liner is a plastic film with a surface having undergone a release treatment. The pressure-sensitive adhesive composition is prepared, for example, by mixing a base polymer, another component, and organic solvents such as toluene and ethyl acetate. In the applying step, a metal member, such as a die or a blade, of the coater scrapes the release liner. The release liner is required to have a thickness large enough to avert the tear, warp, and crease due to the scraping. A substrate to which the pressure-sensitive adhesive composition is to be applied is required to have a thickness of, for example, 35 µm or more, where the substrate is a release liner or a substrate film mentioned hereinafter. After the applying step, the coating film on the release liner is dried by heating to form a pressure-sensitive adhesive layer. The heating temperature is around 120°C, and the heating time is about 1 to 3 minutes.

Next, the first pressure-sensitive adhesive layer on the first release liner is bonded to the one-side surface of the substrate film (first transfer step). Next, the second pressure-sensitive adhesive layer on the second release liner is bonded to the other-side surface of the substrate film (second transfer step). In this manner, the double-sided pressure-sensitive adhesive sheet is produced.

In the double-sided pressure-sensitive adhesive sheet produced as described above, each of the pressure-sensitive adhesive layers is covered with the release liner. The release liners are removed when the double-sided pressure-sensitive adhesive sheet is used. The removed release liners are discarded.

The techniques related to the double-sided pressure-sensitive adhesive sheet described above are disclosed in, for example, Patent Document 1.

### Citation List

### Patent Document

Patent Document 1: Japanese Unexamined Patent Publication No. 2021-175796

In view of the reduction in plastic waste, forming the pressure-sensitive adhesive layer directly on the substrate film (the first method) may be considered in place of forming the pressure-sensitive adhesive layer on the release liner and then transferring the formed pressure-sensitive adhesive layer onto the substrate film in the production of the double-sided pressure-sensitive adhesive sheet. The first method is carried out, for example, as follows.

First, a pressure-sensitive adhesive composition is applied onto the one-side surface of a substrate film with a coater to form a coating film (first applying step). Next, the coating film on the substrate film is dried by heating to form a first pressure-sensitive adhesive layer (first drying step). The first pressure-sensitive adhesive layer is a pressure-sensitive adhesive layer formed from a coating film of the pressure-sensitive adhesive composition applied on the substrate film. In the first drying step, the heating temperature is around 120°C, and the heating time is about 1 to 3 minute(s). Note that the same applies to the second drying step described below. Next, a first release liner is bonded to the pressure-sensitive adhesive layer on the substrate film. Next, a pressure-sensitive adhesive composition is applied onto the other-side surface of the substrate film with a coater to form a coating film (second applying step). Next, the coating film on the substrate film is dried by heating to form a second pressure-sensitive adhesive layer (second drying step). The second pressure-sensitive adhesive layer is a pressure-sensitive adhesive layer formed from a coating film of the pressure-sensitive adhesive composition applied on the substrate film. Next, a second release liner is bonded to the second pressure-sensitive adhesive layer on the substrate film. Using such release liners thinner than the release liners used in the above-described conventional method as the first and second release liners allows for the reduction in the plastic waste caused by the production and use of the double-sided pressure-sensitive adhesive sheet. The reduction in the plastic waste helps the reduction in environmental load.

Meanwhile, the double-sided pressure-sensitive adhesive sheet requires a thinness depending on the purpose. For example, there is strong demand for thinning down the double-sided pressure-sensitive adhesive sheets for display panels. In order to thin the double-sided pressure-sensitive adhesive sheet while allowing the pressure-sensitive adhesive layer to have a thickness required for securing the good adhesive properties of the layer, it is necessary to use a thin substrate film. However, the first method requires a substrate film to have a thickness of, for example, 35 µm or more to avert the tear, warp, and crease of the substrate film in the first applying step. For that reason, the first method is not suitable for thinning the double-sided pressure-sensitive adhesive sheet. In light of the foregoing, the following method (second method) may be considered.

First, a pressure-sensitive adhesive composition (containing a base polymer and toluene and/or ethyl acetate as an organic solvent) is applied onto a first release liner with a coater to form a coating film (first applying step). Next, the coating film on the first release liner is dried by heating to form a first pressure-sensitive adhesive layer (first drying step). The heating temperature is around 120°C, and the heating time is about 1 to 3 minute(s). Note that the same applies to the second drying step described below. Next, the first pressure-sensitive adhesive layer on the first release liner is bonded to the one-side surface of a substrate film. Next, a pressure-sensitive adhesive composition is applied onto the other-side surface of the substrate film to form a coating film (second applying step). Next, the coating film on the substrate film is dried by heating to form a second pressure-sensitive adhesive layer (second drying step). The second pressure-sensitive adhesive layer is a pressure-sensitive adhesive layer formed from a coating film of the pressure-sensitive adhesive composition applied on the substrate film. Next, a second release liner is bonded to the second pressure-sensitive adhesive layer on the substrate film.

In the second method described above, the substrate film of the second applying step is reinforced in effect by the first release liner and pressure-sensitive adhesive layer disposed on the one-side surface of the substrate film. This reinforcement allows for the use of a thin plastic film with a thickness of less than, for example, 35 µm as the substrate film. Thus, the second method is more suitable for thinning the double-sided pressure-sensitive adhesive sheet than the first method. In addition, the second method allows for use of a release liner thinner than the one used in the conventional method described above as the second release liner, and thus for reduction in the plastic waste caused by the production and use of the double-sided pressure-sensitive adhesive sheet by using a thinner release liner than the one used in the conventional method described above as the second release liner. The second method, however, causes a defect in the first pressure-sensitive adhesive layer. The details of the defect are as follows.

The first pressure-sensitive adhesive layer is formed from the pressure-sensitive adhesive composition containing toluene and/or ethyl acetate, and thus a small amount of the toluene and/or ethyl acetate remains in the first pressure-sensitive adhesive layer after the first drying step. In the second drying step, the first pressure-sensitive adhesive layer containing the remaining toluene and/or ethyl acetate is heated in a state of being covered with the substrate film and the first release liner. This heating causes a defect due to the vaporization of the remaining toluene and/or ethyl acetate. The defect of the first pressure-sensitive adhesive layer may make the double-sided pressure-sensitive adhesive sheet deficient in appearance and is undesirable.

The present invention provides a double-sided pressure-sensitive adhesive sheet suitable for reducing environmental load and thinning the double-sided pressure-sensitive adhesive sheet while ensuring a good appearance of the double-sided pressure-sensitive adhesive sheet.

### MEANS FOR SOLVING THE PROBLEM

The present invention [1] includes a double-sided pressure-sensitive adhesive sheet including: a substrate film having a first surface and a second surface opposite the first surface; a first pressure-sensitive adhesive layer disposed on the first surface and having a first adhesive surface opposite the substrate film; a second pressure-sensitive adhesive layer formed from a coating film of a pressure-sensitive adhesive composition applied onto the second surface, the second pressure-sensitive adhesive layer having a second adhesive surface opposite the substrate film; and a release liner in releasable contact with the first adhesive surface, wherein an emission amount of toluene and ethyl acetate from the first pressure-sensitive adhesive layer on heating at 80°C for 30 minutes is 10 µg/g or less.

The present invention [2] includes the double-sided pressure-sensitive adhesive sheet described in the above-described [1], wherein the release liner has a thickness of 35 µm or more.

The present invention [3] includes the double-sided pressure-sensitive adhesive sheet described in the above-described [1] or [2], further including a release liner being in releasable contact with the second adhesive surface and having a thickness of 25 µm or less.

The present invention [4] includes the double-sided pressure-sensitive adhesive sheet described in any one of the above-described [1] to [3], wherein the substrate film includes an anchoring layer forming the first surface and/or an anchoring layer forming the second surface.

The present invention [5] includes the double-sided pressure-sensitive adhesive sheet described in any one of the above-described [1] to [4], wherein the substrate film has a thickness of 12 µm or less.

The double-sided pressure-sensitive adhesive sheet of the present invention may be produced by changing the organic solvent-based pressure-sensitive adhesive composition to a water-dispersed pressure-sensitive adhesive composition in the above-described second method or by drying the coating film at a higher temperature for a longer period of time in the first drying step of the above-described second method. Using a water-dispersed pressure-sensitive adhesive composition allows for the formation of a first pressure-sensitive adhesive layer whose emission amount of the toluene and/or ethyl acetate is 10 µg/g or less. The thorough drying of the coating film in the first drying step allows for the formation of a first pressure-sensitive adhesive layer whose emission amount of the toluene and/or ethyl acetate is 10 µg/g or less. As described above, substantially no toluene and ethyl acetate remain in the first pressure-sensitive adhesive layer. The substantial absence of the toluene and ethyl acetate suppresses the occurrence of a defect caused by the vaporization of the remaining toluene and/or ethyl acetate in the first pressure-sensitive adhesive layer heated together with the second coating film in the second drying step of the second method. The suppression of the defect of the first pressure-sensitive adhesive layer is suitable for ensuring a good appearance of the double-sided pressure-sensitive adhesive sheet. Thus, the double-sided pressure-sensitive adhesive sheet of the present invention is suitable for ensuring a good appearance of the double-sided pressure-sensitive adhesive sheet, and for reducing environmental load and thinning of the double-sided pressure-sensitive adhesive sheet as described above with regard to the second method.
FIG. 1 illustrates a schematic cross-sectional view of one embodiment of the double-sided pressure-sensitive adhesive sheet of the present invention.
FIGS. 2A to 2E illustrate a method for producing the double-sided pressure-sensitive adhesive sheet of the present invention. FIG. 2A illustrates a first applying step. FIG. 2B illustrates a first drying step. FIG. 2C illustrates a bonding step. FIG. 2D illustrates a second applying step. FIG. 2E illustrates a second drying step.
FIG. 3 illustrates a case in which a release liner is bonded to the second pressure-sensitive adhesive layer after the second drying step.

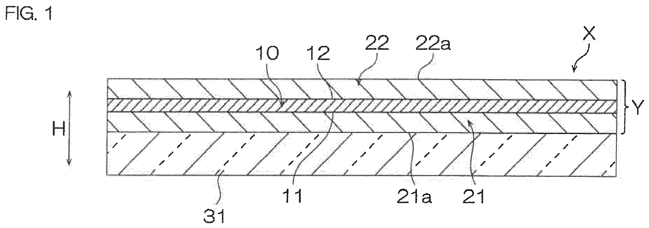

As one embodiment of the present invention, a double-sided pressure-sensitive adhesive sheet X includes a substrate film 10, pressure-sensitive adhesive layers 21 and 22, and a release liner 31 as illustrated in FIG. 1. Specifically, the double-sided pressure-sensitive adhesive sheet X includes the release liner 31, i.e. a first release liner, the pressure-sensitive adhesive layer 21, i.e. a first pressure-sensitive adhesive layer, the substrate film 10, and the pressure-sensitive adhesive layer 22, i.e. a second pressure-sensitive adhesive layer in this order in a thickness direction H. The double-sided pressure-sensitive adhesive sheet X has a sheet shape with a predetermined thickness and extends in a surface direction, i.e. a direction orthogonal to the thickness direction H. The substrate film 10 and the pressure-sensitive adhesive layers 21 and 22 form a double-sided pressure-sensitive adhesive sheet Y.

The double-sided pressure-sensitive adhesive sheet Y is, for example, a pressure-sensitive adhesive sheet disposed at a place where the light passes in the display panel. Examples of the display panel include the display panels of mobile devices and of wearable devices. Such a display panel has, for example, a multilayer structure including elements, such as a pixel panel, a polarizing film, a touch panel, and a cover glass. The double-sided pressure-sensitive adhesive sheet Y is used, for example, for connecting the elements included in the multilayer structure in the process of producing the display panel. The release liner 31 is in releasable contact with the pressure-sensitive adhesive layer 21 side of the double-sided pressure-sensitive adhesive sheet Y. The release liner 31 is removed from the double-sided pressure-sensitive adhesive sheet Y when the double-sided pressure-sensitive adhesive sheet Y is used.

The substrate film 10 has a first surface 11 and a second surface 12 opposite the first surface 11. The substrate film 10 is, for example, a transparent resin film with flexibility. Examples of the material of the substrate film 10 include polyester resin, polyolefin resin, polycarbonate resin, polyether sulfone resin, polyacrylate resin, melamine resin, polyamide resin, polyimide resin, cellulose resin, and polystyrene resin. Examples of the polyester resin include polyethylene terephthalate (PET), polybutylene telephthalate, and polyethylene naphthalate. Examples of the polyolefin resin include polyethylene, polypropylene, and cycloolefin polymer (COP). As the material of the substrate film 10, in view of transparency and strength, preferably polyester resin, more preferably PET is used.

The first surface 11 of the substrate film 10 may be subjected to surface modification treatment in order to secure the adhesiveness of the pressure-sensitive adhesive layer 21 to the substrate film 10. Further, the second surface 12 of the substrate film 10 may be subjected to surface modification treatment in order to secure the adhesiveness of the pressure-sensitive adhesive layer 22 described below to the substrate film 10. Examples of the surface modification treatment include corona treatment, plasma treatment, ozone treatment, primer treatment, and glow treatment.

The first surface 11 of the substrate film 10 may be formed of an anchoring layer that enhances the anchoring property of the pressure-sensitive adhesive layer 21 to ensure adhesion of the pressure-sensitive adhesive layer 21 to the substrate film 10. The second surface 12 of the substrate film 10 may be formed of an anchoring layer that enhances the anchoring property of the pressure-sensitive adhesive layer 22 to ensure adhesion of the pressure-sensitive adhesive layer 22 to the substrate film 10. Examples of the material for forming the anchoring layer include polyurethane-based resin, polyester-based resin, acrylic resin, and polyester polyurethane resin. Examples of the anchoring layer include a layer formed on the surface of the above-described resin film by inline treatment at the time of the formation of the film, and a layer formed on the surface of the resin film after the formation of the film. The anchoring layer has a thickness of, for example, 0.01 µm or more, and, for example, 2.0 µm or less.

The substrate film 10 has a thickness of preferably 1 µm or more, more preferably 2 µm or more, even more preferably 3 µm or more, particularly preferably 4 µm or more in view of ensuring the handling property of the double-sided pressure-sensitive adhesive sheet X. The thickness of the substrate film 10 is, in view of thinning the double-sided pressure-sensitive adhesive sheet Y, preferably 12 µm or less, more preferably 10 µm or less, even more preferably 8 µm or less, particularly preferably 6 µm or less.

The pressure-sensitive adhesive layer 21 is disposed on the first surface 11 of the substrate film 10 and has an adhesive surface 21a opposite the substrate film 10. The pressure-sensitive adhesive layer 21 is formed from a first pressure-sensitive adhesive composition. Examples of the first pressure-sensitive adhesive composition include a water-dispersed pressure-sensitive adhesive composition and an organic solvent-based pressure-sensitive adhesive composition. These pressure-sensitive adhesive layer compositions are described below. It is preferable to use a water-dispersed pressure-sensitive adhesive composition as the material for forming the pressure-sensitive adhesive layer 21 in view of the reduction in environmental load.

The emission amount of toluene and ethyl acetate from the pressure-sensitive adhesive layer 21 on heating the pressure-sensitive adhesive layer 21 at 80°C for 30 minutes, i.e., the toluene and ethyl acetate emission amount, is 10 µg/g or less. The toluene and ethyl acetate emission amount is preferably 7 µg/g or less, more preferably 5 µg/g or less. The toluene and ethyl acetate emission amount may specifically be measured by the method described below with regard to Examples.

The pressure-sensitive adhesive layer 21 has a thickness of preferably 8 µm or more, more preferably 10 µm or more, even more preferably 12 µm or more in view of securing the good adhesion thereof. The thickness of the pressure-sensitive adhesive layer 21 is preferably 30 µm or less, more preferably 25 µm or less, even more preferably 20 µm or less in view of thinning the double-sided pressure-sensitive adhesive sheet Y.

The pressure-sensitive adhesive layer 22 is disposed on the second surface 12 of the substrate film 10 and has an adhesive surface 22a opposite the substrate film 10. The pressure-sensitive adhesive layer 22 is formed from a coating film of the second pressure-sensitive adhesive composition applied on the second surface 12. As detailed below, this helps to reduce the plastic waste caused by the production and use of the double-sided pressure-sensitive adhesive sheet X, and thus reduce the environmental load. Examples of the second pressure-sensitive adhesive composition include a water-dispersed pressure-sensitive adhesive composition and an organic solvent-based pressure-sensitive adhesive composition. These pressure-sensitive adhesive layer compositions are described below. The composition of the second pressure-sensitive adhesive composition may be the same as or different from that of the first pressure-sensitive adhesive composition. The first pressure-sensitive adhesive composition may be a water-dispersed pressure-sensitive adhesive composition while the second pressure-sensitive adhesive composition is an organic solvent-based pressure-sensitive adhesive composition. The first pressure-sensitive adhesive composition may be an organic solvent-based pressure-sensitive adhesive composition while the second pressure-sensitive adhesive composition is a water-dispersed pressure-sensitive adhesive composition. In view of securing the same qualities and properties of the pressure-sensitive adhesive layers 21 and 22, the composition of the second water-dispersed pressure-sensitive adhesive composition and that of the first water-dispersed pressure-sensitive adhesive composition are preferably the same. The pressure-sensitive adhesive layers 21 and 22 having the same qualities and properties are preferable for efficiently processing and using the double-sided pressure-sensitive adhesive sheet Y and the double-sided pressure-sensitive adhesive sheet X without having to distinguish them as the front and back. Further, using a water-dispersed pressure-sensitive adhesive composition as the material for forming the pressure-sensitive adhesive layer 22 is preferable in view of the reduction of the environmental load.

The pressure-sensitive adhesive layer 22 has a thickness of preferably 8 µm or more, more preferably 10 µm or more, even more preferably 12 µm or more in view of securing the good adhesion thereof. The thickness of the pressure-sensitive adhesive layer 22 is, in view of thinning the double-sided pressure-sensitive adhesive sheet Y, preferably 30 µm or less, more preferably 25 µm or less, even more preferably 20 µm or less. The pressure-sensitive adhesive layers 21 and 22 may have the same thickness or different ones from each other. The pressure-sensitive adhesive layers 21 and 22 preferably have the same thickness in view of securing the same qualities and properties of the pressure-sensitive adhesive layers 21 and 22.

The release liner 31 is an element that covers and protects a pressure-sensitive adhesive sheet. The release liner 31 is in releasable contact with the adhesive surface 21a of the pressure-sensitive adhesive layer 21. The release liner 31 is, for example, a plastic film having flexibility. Examples of the plastic film include polyester films, such as a polyethylene terephthalate film, polyethylene films, and polypropylene films. The surface of the pressure-sensitive adhesive layer 21 side of the release liner 31 is preferably subjected to release treatment. Examples of the release treatment include silicone release treatment and fluorine release treatment.

In view of the suppression of the tear, warp, and crease of the release liner 31 in the first applying step described below, the release liner 31 has a thickness T1 of preferably 35 µm or more, more preferably 38 µm or more (in the applying step, a metal member, such as a die or blade, of the coater scrapes the release liner 31). The thickness T1 of the release liner 31 is preferably 50 µm or less, more preferably 45 µm or less in view of the reduction in the plastic waste caused by the production and use of the double-sided pressure-sensitive adhesive sheet.

The water-dispersed pressure-sensitive adhesive composition, i.e., a water-dispersed pressure-sensitive adhesive composition used as the first pressure-sensitive adhesive composition and/or the second pressure-sensitive adhesive composition, is an aqueous emulsion containing a water-dispersible polymer and water. Examples of the water-dispersible polymer include water-dispersible acrylic polymers, water-dispersible urethane-based polymers, and water-dispersible polyester-based polymers, and a water-dispersible acrylic polymer is preferably used. The acrylic polymer is a polymer of a first monomer component, i.e. a monomer component containing alkyl (meth)acrylate in a ratio of 50% by mass or more. Used herein, the "(meth)acrylate" refers to acrylate and/or methacrylate.

Examples of the alkyl (meth)acrylate include an alkyl (meth)acrylate having a straight-chain or branched alkyl group having 1 to 20 carbon atom(s). Examples of the alkyl (meth)acrylate include methyl (meth)acrylate, ethyl (meth)acrylate, propyl (meth)acrylate, n-butyl (meth)acrylate, isopropyl (meth)acrylate, isobutyl (meth)acrylate, s-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, isotridecyl (meth)acrylate, tetradecyl (meth)acrylate, and isotetradecyl (meth)acrylate. The alkyl (meth)acrylates may be used singly or in. combination of two or more. As the alkyl (meth)acrylate, preferably, alkyl acrylate having an alkyl group having 1 to 12 carbon atom(s) is used, more preferably, methyl acrylate and alkyl acrylate having an alkyl group having 2 to 8 carbon atoms are used, even more preferably, methyl acrylate and 2-ethylhexyl acrylate are used.

The ratio of the alkyl (meth)acrylate in the monomer component is preferably 70% by mass or more, more preferably 80% by mass or more, even more preferably 90% by mass or more, particularly preferably 95% by mass or more, and preferably 99.5% by mass or less, more preferably 99% by mass or less in view of appropriate development of the fundamental properties, such as adhesive properties, of the pressure-sensitive adhesive layer formed from the water-dispersed pressure-sensitive adhesive composition.

The monomer component may contain a copolymerizable monomer that can be copolymerized with alkyl (meth)acrylate. Examples of the copolymerizable monomer include polar group-containing monomers. Examples of the polar group-containing monomer include a carboxy group-containing monomer, a hydroxy group-containing monomer, a monomer having a nitrogen atom-containing ring, and a silanol group-containing monomer. The polar group-containing monomer helps to modify the quality of the acrylic polymer, for example, to secure the cohesive force of the acrylic polymer. The copolymerizable monomers may be used singly or in combination of two or more.

Examples of the carboxy group-containing monomer include acrylic acid, methacrylic acid, 2-carboxyethyl (meth)acrylate, carboxypentyl (meth)acrylate, itaconic acid, maleic acid, fumaric acid, and crotonic acid. The monomer component preferably includes a carboxy group-containing monomer, more preferably includes acrylic acid or methacrylic acid, particularly preferably includes a combination of acrylic acid and methacrylic acid in view of securing the adhesive properties of the pressure-sensitive adhesive layer formed from the water-dispersed pressure-sensitive adhesive composition.

The ratio of the carboxy group-containing monomer in the monomer component is preferably 0.5% by mass or more, more preferably 1% by mass or more, even more preferably 1.5% by mass or more in view of securing the cohesive force of the pressure-sensitive adhesive layer formed from the water-dispersed pressure-sensitive adhesive composition. The ratio of the carboxy group-containing monomer in the monomer component is preferably 8% by mass or less, more preferably 5% by mass or less, even more preferably 3% by mass or less in view of the prevention of the corrosion of the adherend by acid.

Examples of the hydroxyl group-containing monomer include 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, and 6-hydroxyhexyl (meth)acrylate.

Examples of the monomer having a nitrogen atom-containing ring include N-vinyl-2-pyrrolidones, N-methylvinylpyrrolidones, N-vinylpyridines, N-vinylpiperidones, N-vinylpyrimidines, N-vinylpiperazines, N-vinylpyrazines, and acryloyl morpholines.

Examples of the silanol group-containing monomer include 3-methacryloxypropyltrimethoxysilane and 3-acryloxypropyltrimethoxysilane.

The water-dispersible acrylic polymer is formed, for example, by emulsion polymerization of the above-described monomer component. In the emulsion polymerization, for example, first, a mixture containing a monomer component, an emulsifier, and water is stirred, thereby preparing a monomer emulsion. Next, a polymerization initiator is added to the monomer emulsion, thereby initiating a polymerization reaction. For the polymerization reaction, a chain transfer agent may be used in order to adjust the molecular weight of the acrylic polymer. The polymerization method may be dropwise polymerization or collective polymerization. The polymerization time is, for example, 0.5 to 10 hours. The polymerization temperature is, for example, 50°C to 80°C.

Examples of the emulsifier include anionic emulsifiers, nonionic emulsifiers, and radically polymerizable emulsifiers, i.e., reactive emulsifiers.

Examples of the anionic emulsifier include sodium polyoxyethylene lauryl sulfate, sodium lauryl sulfate, ammonium lauryl sulfate, sodium dodecyl benzene sulfonate, sodium polyoxyethylene alkyl ether sulfate, ammonium polyoxyethylene alkyl phenyl ether sulfate, sodium polyoxyethylene alkyl phenyl ether sulfate, and sodium polyoxyethylene alkyl sulfosuccinate.

Examples of the nonionic emulsifier include polyoxyethylene alkyl ether, polyoxyethylene alkyl phenyl ether, polyoxyethylene fatty acid ester, and polyoxyethylene polyoxypropylene block polymer.

Examples of the radically polymerizable emulsifier (reactive emulsifier) include an emulsifier in which a radically polymerizable functional group is introduced into the above-described anionic emulsifier or the above-described nonionic emulsifier. Examples of the radically polymerizable functional group include vinyl groups, propenyl groups, isopropenyl groups, vinyl ether groups, and allyl ether groups. Specifically, as the reactive emulsifier, ammonium-α-sulfonate-ω-1-(allyloxymethyl)alkyloxypolyoxyethylene is preferable. When a reactive emulsifier is used as the emulsifier, the water-dispersible acrylic polymer obtained by the emulsion polymerization includes a monomer unit derived from the reactive emulsifier. In other words, the emulsifier is incorporated into the acrylic polymer. Thus, when the pressure-sensitive adhesive layer formed from the water-dispersed pressure-sensitive adhesive composition is bonded to an adherent, the contamination of the adherent by the emulsifier, which is a low molecular weight component, is suppressed.

The emulsifiers may be used alone or in combination of two or more. The blending amount of the emulsifier with respect to 100 parts by mass of the monomer component is, for example, 0.5 parts by mass or more, and, for example, 5 parts by mass or less.

Examples of the polymerization initiator include azo polymerization initiators and peroxide polymerization initiators. Examples of the azo polymerization initiator include 2,2'-azobis{2-[N-(2-carboxyethyl)amidino]propane}, 2,2'-azobisisobutyronitrile, 2,2'-azobis (2-amidinopropane)dihydrochloride, 2,2' -azobis[2-(5-methyl-2-imidazoline-2-yl)propane]dihydrochloride, and 2,2'-azobis (N,N'-dimethyleneisobutylamidine). Examples of the peroxide polymerization initiator include benzoyl peroxide, t-butyl hydroperoxide, and hydrogen peroxide. The polymerization initiators may be used alone or in combination of two or more. The blending ratio of the polymerization initiator with respect to 100 parts by mass of the monomer component is, for example, 0.01 parts by mass or more, and, for example, 2 parts by mass or less.

Examples of the chain transfer agent include glycidylmercaptan, mercaptoacetic acid, 2-mercaptoethanol, t-lauryl mercaptan, t-dodecanethiol, thioglycolic acid, 2-ethylhexyl thioglycolic acid, and 2,3-dimercapto-1-propanol. The chain transfer agents may be used alone or in combination of two or more. The blending ratio of the chain transfer agent with respect to 100 parts by mass of the monomer component is, for example, 0.001 parts by mass or more and 0.5 parts by mass or less.

By the emulsion polymerization described above, the water-dispersible acrylic polymer is prepared as a polymer emulsion, i.e., a water-dispersed solution in which a water-dispersible acrylic polymer is dispersed in water.

The weight average molecular weight (Mw) of the water-dispersible acrylic polymer is, for example, 100000 or more, preferably 300000 or more, and, for example, 5000000 or less, preferably 3000000 or less. The weight average molecular weight of the acrylic polymer is calculated in terms of polystyrene measured by gel permeation chromatography (GPC).

The glass transition temperature (Tg) of the water-dispersible acrylic polymer is, for example, 20°C or less, preferably 0°C or less. The glass transition temperature of the polymer is calculated, for example, using the Fox equation.

The water-dispersed pressure-sensitive adhesive composition may contain another component other than the water-dispersible polymer and water. Examples of the other component include thickeners, leveling agents, tackifiers, silane coupling agents, preservatives, surfactants, cross-linking agents, and antistatic agents.

Examples of the thickener include carboxylic acid copolymer thickeners and polyacrylic acid thickeners.

The carboxylic acid copolymer thickener is an emulsion-type thickener made of a carboxylic acid copolymer. Examples of the carboxylic acid copolymer include a copolymer of a monomer component including a carboxy group-containing acrylic monomer. Examples of commercial products of the carboxylic acid copolymer thickener include "ARON B-300K", "ARON B-500", "ARON A-7055", and "ARON A-7075" manufactured by TOAGOSEI CO., LTD. Preferably, "ARON B-500" is used. The carboxylic acid copolymer thickeners may be used alone or in combination of two or more.

Examples of the polyacrylic acid thickener include polyacrylic acid(homopolymers of acrylic acid), sodium polyacrylate, and ammonium polyacrylate. Examples of commercial products of the polyacrylic acid thickener include "ARON A-10H" (polyacrylic acid), "ARON A-20L" (sodium polyacrylate), "ARON A-7100" (sodium polyacrylate), "ARON A-30" (ammonium polyacrylate), and "ARON A-7195" (ammonium polyacrylate) manufactured by TOAGOSEI CO., LTD. Preferably, "ARON A-10H" is used.

The ratio of the thickener in the solid content of the water-dispersed pressure-sensitive adhesive composition is preferably 1% by mass or more, more preferably 1.4% by mass or more in view of ensuring a thickening of the water-dispersed pressure-sensitive adhesive composition. The ratio of the thickener in the solid content of the water-dispersed pressure-sensitive adhesive composition is preferably 3% by mass or less, more preferably 2.6% by mass or less in view of the prevention of an excessive thickening of the water-dispersed pressure-sensitive adhesive composition. The solid content of the water-dispersed pressure-sensitive adhesive composition is the components other than the water in the water-dispersed pressure-sensitive adhesive composition. Specifically, the solid content is the mixture of the water-dispersible polymer and the other components blended as necessary, such as a thickener, a leveling agent, and a tackifier.

Examples of the leveling agent include "NEOCOL SW-C" (sodium dialkylsulfosuccinate manufactured by DKS Co., Ltd.), "NEOCOL P" (sodium dialkylsulfosuccinate manufactured by DKS Co., Ltd.), "SURFINOL 420" (acetylene glycol ethylene oxide surfactant manufactured by Nissin Chemical co., ltd.), and "PELEX OT-P" (sodium dialkylsulfosuccinate manufactured by Kao Corporation). Examples of the leveling agent further include "NOPCO WET 50" (sulfonic acid-based anionic surfactant), "SN-WET 126" (modified silicone/specially-treated polyether-based surfactant), "SN-WET FST2" (nonionic wetting agent of polyoxyalkyleneamine), "SN-WET S" (nonionic wetting agent of polyoxyalkyleneamine ether), and "SN-WET 125" (modified silicone-based surfactant), each of which is manufactured by SAN NOPCO LIMITED. The leveling agent may be used alone or in combination of two or more. In view of ensuring a good leveling property in the water-dispersed pressure-sensitive adhesive composition, at least one selected from "NEOCOL SW-C", "NEOCOL P" and "PELEX OT-P" is preferably used as the leveling agent.

The blending ratio of the leveling agent to 100 parts by mass of the water-dispersible polymer is preferably 0.1 parts by mass or more, more preferably 0.5 parts by mass or more, even more preferably 0.8 parts by mass or more in view of the prevention of repellence of the water-dispersed pressure-sensitive adhesive composition. Further, the blending ratio of the leveling agent is preferably 3 parts by mass or less, more preferably 2 parts by mass or less, even more preferably 1 part by mass or less in view of securing the good adhesive properties of the water-dispersed pressure-sensitive adhesive composition.

Examples of the tackifier include various tackifier resins such as rosin-based resins, rosin derivative resins, petroleum-based resins, terpene-based resins, phenol-based resins, and ketone-based resins. The blending amount of the tackifier with respect to 100 parts by mass of the water-dispersible polymer is preferably 5 parts by mass or more, more preferably 15 parts by mass or more, even more preferably 20 parts by mass or more, particularly preferably 25 parts by mass or more, and, preferably 50 parts by mass or less, more preferably 45 parts by mass or less, even more preferably 40 parts by mass or less in view of the balance between the viscosity of the water-dispersed pressure-sensitive adhesive composition and the adhesive properties of the pressure-sensitive adhesive layer formed from the water-dispersed pressure-sensitive adhesive composition.

Examples of the silane coupling agent include 3-methacryloxypropyltrimethoxysilane, 3-methacryloxypropylmethyldimethoxysilane, 3-methacryloxypropylmethyldiethoxysilane, and 3-methacryloxypropyltriethoxysilane. Preferably, 3-methacryloxypropyltrimethoxysilane is used. The blending amount of the silane coupling agent with respect to 100 parts by mass of the water-dispersible polymer is, for example, 0.005 parts by mass or more, and, for example, 1 part by mass or less.

The water-dispersed pressure-sensitive adhesive composition does not contain organic solvents such as toluene and ethyl acetate. Such a water-dispersed pressure-sensitive adhesive composition is preferable in view of the reduction in environmental load.

The water-dispersed pressure-sensitive adhesive composition may be prepared, for example, by adding each component to an emulsion polymerization solution of a water-dispersible polymer. Further, the solid content concentration of the water-dispersed pressure-sensitive adhesive composition is adjusted by increasing or decreasing the water content of the water-dispersed pressure-sensitive adhesive composition.

The solid content concentration of the water-dispersed pressure-sensitive adhesive composition is, in view of securing the good viscosity thereof, preferably 10% by mass or more, more preferably 15% by mass or more, even more preferably 20% by mass or more, and, preferably 50% by mass or less, more preferably 40% by mass or less, even more preferably 35% by mass or less.

The organic solvent-based pressure-sensitive adhesive composition, i.e., the organic solvent-based pressure-sensitive adhesive composition used as the first pressure-sensitive adhesive composition and/or the second pressure-sensitive adhesive composition, contains a base polymer and an organic solvent. Examples of the base polymer include acrylic polymers, urethane polymers, polyester polymers, and silicone polymers, and an acrylic polymer is preferably used. The acrylic polymer is a polymer of a second monomer component, i.e. a monomer component containing alkyl (meth)acrylate in a ratio of 50% by mass or more. Used herein, the "(meth)acrylate" refers to acrylate and/or methacrylate.

Examples of the alkyl (meth)acrylate include the alkyl (meth)acrylates described above in regard to the water-dispersed pressure-sensitive adhesive composition. The second monomer component may contain a copolymerizable monomer that can be copolymerized with alkyl (meth)acrylate. Examples of the copolymerizable monomer include the copolymerizable monomers described above in regard to the first monomer component. The ratio of the alkyl (meth)acrylate and each copolymerizable monomer in the second monomer component is the same as that of the alkyl (meth)acrylate and each copolymerizable monomer in the first monomer component.

The acrylic polymer may be formed, for example, by subjecting the second monomer component to solution polymerization. Examples of the solvent for the solution polymerization include toluene and ethyl acetate. Examples of the initiator for the polymerization include the above-described azo polymerization initiators and peroxide polymerization initiators. The usage of the polymerization initiator with respect to 100 parts by mass of the second monomer component is, for example, 0.05 parts by mass or more, and, for example, 1 part by mass or less. For the polymerization reaction, a chain transfer agent may be used in order to adjust the molecular weight of the acrylic polymer. The weight average molecular weight (Mw) of the acrylic polymer is, for example, 100000 or more, preferably 300000 or more, and, for example, 5000000 or less, preferably 3000000 or less. The glass transition temperature (Tg) of the acrylic polymer is, for example, 20°C or less, preferably 0°C or less.

The organic solvent-based pressure-sensitive adhesive composition may contain another component other than the base polymer and the organic solvent. Examples of the other component include thickeners, leveling agents, tackifiers, silane coupling agents, preservatives, cross-linking agents, and antistatic agents.

The organic solvent-based pressure-sensitive adhesive composition may be prepared, for example, by adding each component to the base polymer-containing solution after the solution polymerization. Further, the solid content concentration of the pressure-sensitive adhesive composition is adjusted by increasing or decreasing the content of the organic solvent.

The solid content concentration of the organic solvent-based pressure-sensitive adhesive composition is, in view of securing the good viscosity thereof, preferably 10% by mass or more, more preferably 15% by mass or more, even more preferably 20% by mass or more, and, preferably 50% by mass or less, more preferably 40% by mass or less, even more preferably 35% by mass or less. The organic solvent-based pressure-sensitive adhesive composition contains the organic solvent in significant quantity.

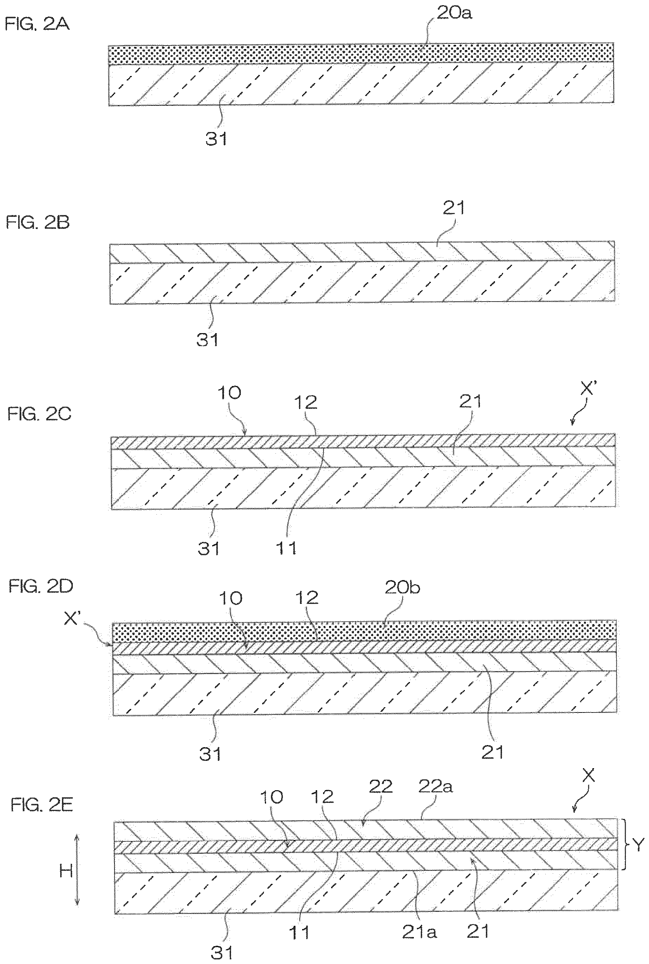

FIGS. 2A to 2E illustrate a method for producing the double-sided pressure-sensitive adhesive sheet X. The method includes a first applying step, a first drying step, a bonding step, a second applying step, and a second drying step.

In the first applying step, as illustrated in FIG. 2A, a coating film 20a is formed on a release liner 31. Specifically, a first pressure-sensitive adhesive composition is applied onto the release liner 31 with a coater to form the coating film 20a. Examples of the method of applying the composition include roll coating, kiss roll coating, gravure coating, reverse roll coating, roll brush coating, bar coating, knife coating, air knife coating, curtain coating, lip coating, and die coating. As the application method, die coating is preferable. The coater to be used in this step depends on the application method.

In the first drying step, as illustrated in FIG. 2B, the coating film 20a on the release liner 31 is dried by heating to form a pressure-sensitive adhesive layer 21, i.e., the first pressure-sensitive adhesive layer.

When a water-dispersed pressure-sensitive adhesive composition is used as the first pressure-sensitive adhesive composition, the drying temperature is, in view of the efficiencies in drying, preferably 25°C or more, more preferably 60°C or more, even more preferably 80°C or more. The drying temperature is, in view of the suppression of the deformation (expansion or contraction) of the release liner 31, preferably 140°C or less, more preferably 130°C or less, even more preferably 125°C or less. The drying time is, depending on the drying temperature, for example, 1 to 10 minute(s).

When an organic solvent-based pressure-sensitive adhesive composition is used as the first pressure-sensitive adhesive composition, the coating film 20a is thoroughly dried as compared with the case in which a water-dispersed pressure-sensitive adhesive composition is used. The thorough drying is specified as follows. In view of a sufficient reduction in the organic solvent remaining in the pressure-sensitive adhesive layer 21, the drying temperature is preferably 80°C or more, more preferably 100°C or more, even more preferably 110°C or more, particularly preferably 120°C or more. The drying temperature is, in view of the suppression of the deformation (expansion or contraction) of the release liner 31, preferably 140°C or less, more preferably 130°C or less, even more preferably 125°C or less. The drying time is, depending on the drying temperature, for example, 5 to 30 minutes. Specifically, when the drying temperature is between 110°C and 125°C, the drying time is, in view of a sufficient reduction in the organic solvent remaining in the pressure-sensitive adhesive layer 21, preferably 6 minutes or more, more preferably 8 minutes or more, even more preferably 10 minutes or more. The drying time is, in view of the efficiencies in the production of the double-sided pressure-sensitive adhesive sheet X, preferably 30 minutes or less, more preferably 25 minutes or less, even more preferably 20 minutes or less.

In the bonding step, as illustrated in FIG. 2C, the substrate film 10 is bonded to the pressure-sensitive adhesive layer 21 on the release liner 31. Specifically, the first surface 11 of the substrate film 10 is bonded to an exposed surface of the pressure-sensitive adhesive layer 21 on the release liner 31. For the bonding, for example, a laminator is used. By this step, a laminate film X' is produced as an intermediate product.

In the second applying step, as illustrated in FIG. 2D, a coating film 20b is formed on the substrate film 10 of the laminate film X'. Specifically, the second pressure-sensitive adhesive composition is applied onto a second surface 12 of the substrate film 10 with a coater to form the coating film 20b, i.e., a coating film applied to the substrate film 10.

In the second drying step, as illustrated in FIG. 2E, the coating film 20b on the substrate film 10 is dried by heating to form a pressure-sensitive adhesive layer 22, i.e., the second pressure-sensitive adhesive layer. The drying temperature is, in view of the efficiencies in drying, preferably 25°C or more, more preferably 60°C or more, even more preferably 80°C or more. The drying temperature is, in view of the suppression of the deformation (expansion or contraction) of the release liner 31 and the substrate film 10, preferably 140°C or less, more preferably 130°C or less, even more preferably 120°C or less. When the same water-dispersed pressure-sensitive adhesive composition or the same organic solvent-based pressure-sensitive adhesive composition is used as the first and second pressure-sensitive adhesive compositions, the drying temperature of the second drying step is preferably the same as that of the first drying step. The drying time is, depending on the drying temperature, for example, 1 to 30 minute(s). When the same water-dispersed pressure-sensitive adhesive composition or the same organic solvent-based pressure-sensitive adhesive composition is used as the first and second pressure-sensitive adhesive compositions, the drying time of the second drying step is preferably the same as that of the first drying step.

As described above, the double-sided pressure-sensitive adhesive sheet X is produced as a double-sided pressure-sensitive adhesive sheet with a release liner on one side.

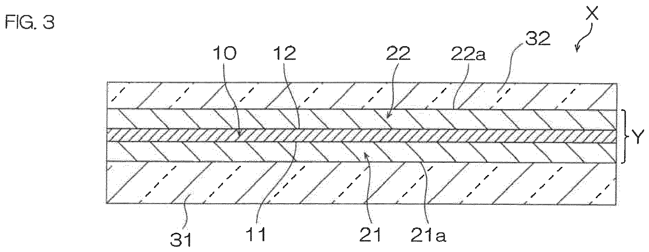

The double-sided pressure-sensitive adhesive sheet X, as illustrated in FIG. 3, may further include a release liner 32 that covers the adhesive surface 22a of the pressure-sensitive adhesive layer 22. Such a double-sided pressure-sensitive adhesive sheet X is a double-sided pressure-sensitive adhesive sheet with release liners on both sides. The double-sided pressure-sensitive adhesive sheet X illustrated in FIG. 3 may be produced by bonding the release liner 32 to the adhesive surface 22a of the pressure-sensitive adhesive layer 22 after the second drying step described above with FIG. 2E. The double-sided pressure-sensitive adhesive sheet X is preferably a double-sided pressure-sensitive adhesive sheet with a release liner on one side in view of the reduction in the plastic waste caused by the production and use of the double-sided pressure-sensitive adhesive sheet.

The release liner 32 is an element that covers and protects the pressure-sensitive adhesive sheet. The release liner 32 is, for example, a plastic film with flexibility. Examples of the plastic film include polyester films, such as a polyethylene terephthalate film, polyethylene films, and polypropylene films. The surface of the pressure-sensitive adhesive layer 22 side of the release liner 32 is preferably subjected to release treatment. Examples of the release treatment include silicone release treatment and fluorine release treatment.

The release liner 32 is thinner than the release liner 31. The release liner 32 has a thickness T2 of preferably 25 µm or less, more preferably 20 µm or less, even more preferably 18 µm or less in view of the reduction in the plastic waste caused by the production and use of the double-sided pressure-sensitive adhesive sheet. The thickness T2 of the release liner 32 is preferably 10 µm or more, more preferably 12 µm or more in view of securing the protective function of the release liner 32.

The total thickness (T1 + T2) of the release liners 31 and 32 is preferably 75 µm or less, more preferably 70 µm or less, even more preferably 65 µm or less or less in view of the reduction in the plastic waste caused by the production and use of the double-sided pressure-sensitive adhesive sheet. The total thickness (T1 + T2) is preferably 45 µm or more, more preferably 47 µm or more in view of securing the protective function of the release liner.

In the second applying step (FIG. 2D) in the above-described production method, the substrate film 10 is reinforced in effect by the release liner 31 and pressure-sensitive adhesive layer 21 disposed on the first surface 11 side. In the second applying step, the second pressure-sensitive adhesive composition is applied onto the second surface 12 of the substrate film 10 using a coater. Such a production method is suitable for using a thin substrate film 10. The thickness of the substrate film 10 is, in view of thinning the double-sided pressure-sensitive adhesive sheet Y, preferably 12 µm or less, more preferably 10 µm or less, even more preferably 8 µm or less, particularly preferably 6 µm or less.

Further, the above-described production method allows for the production of a double-sided pressure-sensitive adhesive sheet that does not include a release liner covering the pressure-sensitive adhesive layer 22, i.e., a double-sided pressure-sensitive adhesive sheet X illustrated in FIG. 2E. The above-described production method alternatively allows for the production of a double-sided pressure-sensitive adhesive sheet in which the pressure-sensitive adhesive layer 22 is covered by a thin release liner 32 that is torn, warped, or creased in the applying step using a coater, i.e., a double-sided pressure-sensitive adhesive sheet X illustrated in FIG. 3. Such a production method is suitable for reducing the plastic waste caused by the production and use of the double-sided pressure-sensitive adhesive sheet and reducing environmental load.

Furthermore, the above-described production method allows for the formation of a pressure-sensitive adhesive layer 21 in which toluene and/or ethyl acetate do/does not substantially remain. Specifically, using a water-dispersed pressure-sensitive adhesive composition as the first pressure-sensitive adhesive composition allows for the formation of a pressure-sensitive adhesive layer 21, the toluene and ethyl acetate emission amount of which is 10 µg/g or less. Alternatively, thoroughly drying the coating film in the first drying step described above with FIG. 2B allows for the formation of a pressure-sensitive adhesive layer 21, the toluene and ethyl acetate emission amount of which is 10 µg/g or less. The toluene and ethyl acetate emission amount is, preferably 7 µg/g or less, more preferably 5 µg/g or less. As described above, substantially no toluene and ethyl acetate remain in the pressure-sensitive adhesive layer 21. Thus, in the pressure-sensitive adhesive layer 21 heated together with the coating film 20b in the second drying step (FIG. 2E), the occurrence of a defect caused by the vaporization of the remaining toluene and/or ethyl acetate is suppressed. The suppression of the defect of the pressure-sensitive adhesive layer 21 is suitable for ensuring a good appearance of the double-sided pressure-sensitive adhesive sheet X.

The double-sided pressure-sensitive adhesive sheet X is produced by the production method as described above. Thus, the double-sided pressure-sensitive adhesive sheet X is suitable for reducing the environmental load and thinning the double-sided pressure-sensitive adhesive sheet X while ensuring a good appearance of the double-sided pressure-sensitive adhesive sheet X.

### Examples

Next, the present invention is specified below with reference to Examples. The present invention is however not limited by these Examples. The specific numerical values of the mixing ratios (content ratios), property values, and parameters used in the following description can be replaced with the upper limit values (numerical values defined as "or less" or "below") or lower limit values (numerical values defined as "or more" or "above") of the corresponding numerical values of the mixing ratios (content ratios), property values, and parameters described above.

### [Example 1]

### <Preparation of Water-dispersed Pressure-sensitive Adhesive Composition>

In a vessel, a mixture containing 30 parts by mass of distilled water, 85 parts by mass of 2-ethylhexyl acrylate, 13 parts by mass of methyl acrylate, 1.25 parts by mass of acrylic acid, 0.75 parts by mass of methacrylic acid, 0.035 parts by mass of t-dodecanethiol as a chain transfer agent, 1.88 parts by mass of a reactive emulsifier (product name "AQUARON KH-1025", ammonium-α-sulfonate-ω-1-(allyloxymethyl)alkyloxypolyoxyethylene, manufactured by DKS Co., Ltd.), and 0.02 parts by mass of a silane coupling agent (product name "KBM-503", 3-methacryloxypropyltrimethoxysilane, manufactured by Shin-Etsu Chemical Co., Ltd) was stirred with a homo mixer, thereby preparing a monomer emulsion.

Meanwhile, in a reaction vessel equipped with a reflux condenser tube, a nitrogen introduction tube, a thermometer, and a stirrer, a mixture containing 73 parts by mass of ion-exchanged water and 0.07 parts by mass of a reactive emulsifier (AQUARON KH- 1025) was stirred at 60°C in a nitrogen atmosphere for one hour. Next, 0.1 parts by mass of 2,2'-azobis{2-[N-(2-carboxyethyl)amidino]propane} 4 hydrate (product name "VA-057" manufactured by FUJIFILM Wako Pure Chemical Corporation) as a polymerization initiator was added to the stirred mixture. Thereafter, while the mixture was kept at 60°C, the prepared monomer emulsion was added dropwise thereto over four hours to develop the emulsion polymerization reaction. Next, the reaction solution was held at 60°C for three hours (aging). Next, the aged solution was cooled to room temperature. Thereafter, the pH of the solution was adjusted to 6.0 by adding a 10% by mass ammonia aqueous solution. As described above, an acrylic polymer emulsion containing a water-dispersible acrylic polymer as a water-dispersible polymer was prepared.

To the acrylic polymer emulsion, per 100 parts by mass of the water-dispersible acrylic polymer, 1.00 part by mass, based on dried solid, of a carboxylic acid copolymer thickener (product name "ARON B-500" manufactured by TOAGOSEI CO., LTD.), 3.15 parts by mass, based on dried solid, of a polyacrylic acid thickener (product name "ARON A-10H", polyacrylic acid having a weight average molecular weight of 200000, manufactured by TOAGOSEI CO., LTD.), 35 parts by mass, based on dried solid, of a tackifier (product name "TAMANOL E-200NT", terpene-based resin, manufactured by ARAKAWA CHEMICAL INDUSTRIES, LTD.), and 0.89 parts by mass, based on dried solid, of a leveling agent (product name "NEOCOL SW-C", sodium dialkylsulfosuccinate manufactured by DKS Co., Ltd.) were added and mixed. Next, by adding ion-exchanged water, the solid content concentration of the mixture was adjusted to 25.5% by mass. Thereafter, by adding a 10% by mass ammonia aqueous solution, the pH of the mixture was adjusted to 9.0. As described above, a water-dispersed pressure-sensitive adhesive composition C1 having a solid content concentration of 25.5% by mass was prepared.

### <Production of Double-sided Pressure-sensitive Adhesive Sheet>

The water-dispersed pressure-sensitive adhesive composition C1 was applied onto the release liner L1 as the first release liner with a coater, thereby forming a coating film (the first applying step). The release liner L1 was a polyethylene terephthalate (PET) film subjected to silicone release treatment (product name "DIAFOIL MRF #38" having a thickness of 38 µm, manufactured by Mitsubishi Chemical Holdings Corporation). In this step, the water-dispersed pressure-sensitive adhesive composition C1 was applied to the release-treated surface of the release liner L1. In this step, a single-sided coater of the die coater type was used (the same applies to the applying step described below).

Next, the coating film on the release liner L1 was dried at 120°C in an oven for two minutes, thereby forming a pressure-sensitive adhesive layer with a thickness of 13 µm, i.e., the first pressure-sensitive adhesive layer (the first drying step).

Next, a substrate film with a thickness of 4 µm (product name "K330E4.5W", a PET film, manufactured by Mitsubishi Chemical Holdings Corporation) was bonded onto the pressure-sensitive adhesive layer on the release liner L1 (the bonding step). In this manner, a laminate film of the release liner L1, the first pressure-sensitive adhesive layer, and the substrate film was produced as an intermediate product.

Next, the water-dispersed pressure-sensitive adhesive composition C1 was applied onto the substrate film on the laminate film, thereby forming a coating film (the second applying step).

Next, the coating film on the substrate film was dried in an oven for two minutes, thereby forming a pressure-sensitive adhesive layer with a thickness of 13 µm, i.e., the second pressure-sensitive adhesive layer (the second drying step).

As described above, the double-sided pressure-sensitive adhesive sheet of Example 1 was produced. The double-sided pressure-sensitive adhesive sheet of Example 1 was a double-sided pressure-sensitive adhesive sheet with a release liner on one side, and included a release liner L1, i.e. the first release liner, with a thickness of 38 µm, a first pressure-sensitive adhesive layer with a thickness of 13 µm formed from the water-dispersed pressure-sensitive adhesive composition C1, a substrate film with a thickness of 4 µm, and a second pressure-sensitive adhesive layer with a thickness of 13 µm formed from the water-dispersed pressure-sensitive adhesive composition C1 in this order in the thickness direction. The total thickness of the first pressure-sensitive adhesive layer, the substrate film, and the second pressure-sensitive adhesive layer was 30 µm.

### [Example 2]

### <Preparation of Pressure-sensitive Adhesive Composition>

First, in a reaction vessel equipped with a reflux condenser tube, a nitrogen introduction tube, a thermometer, and a stirrer, a mixture containing 70 parts by mass of n-butyl acrylate (BA), 30 parts by mass of 2-ethylhexyl acrylate (2EHA), 3 parts by mass of acrylic acid, 0.05 parts by mass of 4-hydroxybutyl acrylate (4HBA), 0.2 parts by mass of 2,2'-azobisisobutyronitrile (AIBN) as a thermal polymerization initiator, and toluene as a solvent was stirred at 60°C under a nitrogen atmosphere for six hours (polymerization reaction). By that, a polymer solution containing an acrylic base polymer was produced. The acrylic base polymer in the polymer solution had a weight average molecular weight of about 550000.

Next, to the polymer solution, per 100 parts by mass of the acrylic base polymer, 30 parts by mass of a tackifier (product name "Pensel D- 125", polymerized rosin ester resin, manufactured by ARAKAWA CHEMICAL INDUSTRIES, LTD.), and 3 parts by mass of a cross-linking agent (product name "Coronate L", a trimethylol propane adduct of tolylene diisocyanate, manufactured by Tosoh) were added and mixed, thereby preparing a pressure-sensitive adhesive composition C2.

### <Production of Double-sided Pressure-sensitive Adhesive Sheet>

The double-sided pressure-sensitive adhesive sheet of Example 2 was produced in the same manner as the production of the double-sided pressure-sensitive adhesive sheet of Example 1, except for the following. The pressure-sensitive adhesive composition C2 was used instead of the water-dispersed pressure-sensitive adhesive composition C1. The conditions for drying in the first drying step were changed from at a temperature of 120°C for two minutes to at a temperature of 120°C for 10 minutes.

The double-sided pressure-sensitive adhesive sheet of Example 2 includes a release liner L1, i.e. the first release liner, with a thickness of 38 µm, the first pressure-sensitive adhesive layer formed from the pressure-sensitive adhesive composition C2 with a thickness of 13 µm, the substrate film with a thickness of 4 µm, and the second pressure-sensitive adhesive layer with a thickness of 13 µm formed from the pressure-sensitive adhesive composition C2 in this order in the thickness direction.

### [Comparative Example 1]

The pressure-sensitive adhesive composition C2 was applied to the release-treated surface of the release liner L1 as the first release liner (DIAFOIL MRF #38), thereby forming a coating film. Next, the coating film on the release liner L1 was dried at 120°C in an oven for two minutes, thereby forming a pressure-sensitive adhesive layer, i.e. the first pressure-sensitive adhesive layer, with a thickness of 13 µm.

On the other hand, the pressure-sensitive adhesive composition C2 was applied to the release liner L2 as the second release liner, thereby forming a coating film. The release liner L2 was a PET film subjected to silicone release treatment (product name "DIAFOIL MRF #38" with a thickness of 38 µm manufactured by Mitsubishi Chemical Holdings Corporation). In this step, the pressure-sensitive adhesive composition C2 was applied to the release-treated surface of the release liner L2 to form the coating film. Next, the coating film on the release liner L2 was dried at 120°C in an oven for two minutes, thereby forming a pressure-sensitive adhesive layer, i.e. the second pressure-sensitive adhesive layer, with a thickness of 13 µm.

Next, the pressure-sensitive adhesive layer on the release liner L1 was bonded to the one-side surface of a substrate film (product name "K330E4.5W", a PET film, manufactured by Mitsubishi Chemical Holdings Corporation) with a thickness of 4 µm (the first transfer step). Next, the pressure-sensitive adhesive layer on the release liner L2 is bonded onto the other-side surface of the substrate film (the first transfer step).

As described above, the double-sided pressure-sensitive adhesive sheet of Comparative Example 1 was produced. The double-sided pressure-sensitive adhesive sheet of Comparative Example 1 was a double-sided pressure-sensitive adhesive sheet with release liners on both side, and included a release liner L1, i.e. the first release liner, with a thickness of 38 µm, a first pressure-sensitive adhesive layer with a thickness of 13 µm formed from the pressure-sensitive adhesive composition C2, a substrate film with a thickness of 4 µm, a second pressure-sensitive adhesive layer with a thickness of 13 µm formed from the pressure-sensitive adhesive composition C2, and a release liner L2, i.e. the second release liner, with a thickness of 38 µm in this order in the thickness direction.

### [Comparative Example 2]

The double-sided pressure-sensitive adhesive sheet of Comparative Example 2 was produced in the same manner as the production of the double-sided pressure-sensitive adhesive sheet of Example 1 except that the pressure-sensitive adhesive composition C2 was used instead of the water-dispersed pressure-sensitive adhesive composition C1. The double-sided pressure-sensitive adhesive sheet of Comparative Example 2 was a double-sided pressure-sensitive adhesive sheet with a release liner on one side, and included a release liner L1, i.e. the first release liner, with a thickness of 38 µm, a first pressure-sensitive adhesive layer with a thickness of 13 µm formed from the pressure-sensitive adhesive composition C2, a substrate film with a thickness of 4 µm, and a second pressure-sensitive adhesive layer with a thickness of 13 µm formed from the pressure-sensitive adhesive composition C2 in this order in the thickness direction.

### [Comparative Example 3]

The first applying step, which is described above with regard to Example 1, was carried out using a thin release liner L3 instead of the release liner L1 with a thickness of 38 µm. The release liner L2 was a PET film subjected to silicone release treatment (product name "DIAFOIL MRF #25" with a thickness of 25 µm manufactured by Mitsubishi Chemical Holdings Corporation). Specifically, the water-dispersed pressure-sensitive adhesive composition C1 was applied onto the release-treated surface of the release liner L3 with the coater in this step, thereby forming a coating film. However, the release liner L3 was warped, creased and torn during passing through the coater thereon. Accordingly, the process of producing the double-sided pressure-sensitive adhesive sheet with a release liner was not appropriately continued.

### <Organic solvent content of First Pressure-sensitive Adhesive Layer>

The amount of toluene and ethyl acetate emitted by heating the first pressure-sensitive adhesive layer of the double-sided pressure-sensitive adhesive sheet of each of Examples 1 and 2, and Comparative Examples 1 and 2 was measured as follows.

First, the surface (exposed surface) of the second pressure-sensitive adhesive layer of the double-sided pressure-sensitive adhesive sheet was covered with aluminum foil, and the first release liner was removed to expose the first pressure-sensitive adhesive layer. Next, a sample sheet of 5 cm² in area was cut out of the double-sided pressure-sensitive adhesive sheet. Next, the sample sheet was put in a vial, and thereafter the vail was sealed. Next, the vial was heated at 80°C. Using a headspace automatic sampler (product name "7697A" manufactured by Agilent Technologies), a 1.0 mL gas sample was taken from the vial 30 minutes after the beginning of the heat of the vail. Then, the gas was injected into a gas chromatography system (product name "7890B", manufactured by Agilent Technologies) to measure the amount of toluene and the amount of ethyl acetate in the gas, using the system under the following conditions. From the measurement results, the toluene and ethyl acetate emission amount (µg/g) per unit mass (1g) from the first pressure-sensitive adhesive layer of the sample sheet was calculated. The results are shown in Table 1. The total mass of the first pressure-sensitive adhesive layer of the sample sheet was a mass calculated based on an area of about 5 cm² in a plan view, a thickness of 13 µm, and an assumed specific gravity of one.

### [Conditions for Measurement of Gas Chromatograph]

Column: DB-FFAP having an inner diameter of 0.535 mm, a length of 30 m, and a film thickness of 1.0 µm and manufactured by Agilent Technologies
Carrier Gas: He (5.0 mL/min)
Column Head Pressure: 23 kPa (40°C)
Inlet: Split (Split ratio of 12 : 1 at a temperature of 250°C)
Column Temperature: increased from 40°C to 250°C at a rate of temperature increase of 10°C/min and kept at 250°C for nine minutes.
Detector: FID (temperature 250°C)

### <Evaluation of Appearance>

The appearance of each of the double-sided pressure-sensitive adhesive sheets of Examples 1 and 2 and Comparative Examples 1 and 2 was evaluated as follows.

First, a sample sheet of 1 m² in area was cut out of the double-sided pressure-sensitive adhesive sheet. Next, the sample sheet was visually observed to check the presence or absence of defects and the number of defects (foreign material and/or discoloration). Then, the appearance of each double-sided pressure-sensitive adhesive sheet was evaluated as "good" when a defect with a maximum length of 2 mm or more was not observed, and as "bad" when a defect with a maximum length of 2 mm or more was observed. The results are shown in Table 1. The number of the defects with a maximum length of 2 mm or more is also shown in Table 1. The defects of the double-sided pressure-sensitive adhesive sheet of Comparative Example 2 were confirmed between the first pressure-sensitive adhesive layer and the first release liner. The defects were caused by the vaporization of the organic solvent (toluene and/or ethyl acetate) remaining in the first pressure-sensitive adhesive layer in the second drying step of the process of producing the double-sided pressure-sensitive adhesive sheet of Comparative Example 2.

**Table 1**

| | | Example 1 | Example 2 | Comp. Example 1 | Comp. Example 2 |
|---|---|---|---|---|---|
| Thickness of Second Release Liner (µm) | | - | - | 38 | - |
| Thickness of Second Pressure-sensitive Adhesive Layer (µm) | | 13 (C1) | 13 (C2) | 13 (C2) | 13 (C2) |
| Thickness of Substrate Film (µm) | | 4 | 4 | 4 | 4 |
| Thickness of First Pressure-sensitive Adhesive Layer (µm) | | 13 (C1) | 13 (C2) | 13 (C2) | 13 (C2) |
| Thickness of First Release Liner (µm) | | 38 | 38 | 38 | 38 |
| First Drying Step | Temperature (°C) | 120 | 120 | 120 | 120 |
| | Time (min) | 2 | 10 | 2 | 2 |
| Total Thickness except for Release Liner (µm) | | 30 | 30 | 30 | 30 |
| Toluene and/or Ethyl Acetate Emission Amount (µg/g) | | 1 | 5 | 1 | 20 |
| Evaluation of Appearance (The Number of Defects of 2 mm or more) | | Good (0) | Good (0) | Good (0) | Bad (5) |

### [Evaluation]

The double-sided pressure-sensitive adhesive sheets of Examples 1 and 2, and Comparative Examples 1 and 2 (the double-sided pressure-sensitive adhesive sheets with a release liner on one side or the double-sided pressure-sensitive adhesive sheets with release liners on both side) each had a substrate film, 4 µm in thickness, and had the same total thickness (30 µm) of the first pressure-sensitive adhesive layer, substrate film, and second pressure-sensitive adhesive layer. Whereas the double-sided pressure-sensitive adhesive sheet of Comparative Example 1 was a double-sided pressure-sensitive adhesive sheet with release liners on both sides, the double-sided pressure-sensitive adhesive sheets of Example 1 and 2 each were a double-sided pressure-sensitive adhesive sheet with a release liner on one side. Each of the double-sided pressure-sensitive adhesive sheets of Examples 1 and 2 is more suitable for reducing the plastic waste caused by the production and use of the double-sided pressure-sensitive adhesive sheet than the double-sided pressure-sensitive adhesive sheet of Comparative Example 1. Further, the double-sided pressure-sensitive adhesive sheet of Comparative Example 2, whose toluene and ethyl acetate emission amount from the first pressure-sensitive adhesive layer was more than 10 µg/g, was not good in appearance. On the other hand, the double-sided pressure-sensitive adhesive sheets of Examples 1 and 2, whose toluene and ethyl acetate emission amount from the first pressure-sensitive adhesive layer was 10 µg/g or less, were good in appearance. Furthermore, when a release liner L3 with a thickness of 25 µm was used as the first release liner (Comparative Example 3), as described above, the process of producing the double-sided pressure-sensitive adhesive sheet with the release liner was not appropriately continued.

### Description of Reference Numerals

- X: pressure-sensitive adhesive sheet (double-sided pressure-sensitive adhesive sheet)
- 10: substrate film
- 11: first surface
- 12: second surface
- 21: pressure-sensitive adhesive layer (first pressure-sensitive adhesive layer)
- 21a: adhesive surface (first adhesive surface)
- 22: pressure-sensitive adhesive layer (second pressure-sensitive adhesive layer)
- 22a: adhesive surface (second adhesive surface)
- 31, 32: release liner

## Claims

1. A double-sided pressure-sensitive adhesive sheet comprising:
a substrate film having a first surface and a second surface opposite the first surface;
a first pressure-sensitive adhesive layer disposed on the first surface and having a first adhesive surface opposite the substrate film;
a second pressure-sensitive adhesive layer formed from a coating film of a pressure-sensitive adhesive composition applied onto the second surface, the second pressure-sensitive adhesive layer having a second adhesive surface opposite the substrate film; and
a release liner in releasable contact with the first adhesive surface,
wherein an emission amount of toluene and ethyl acetate from the first pressure-sensitive adhesive layer on heating at 80°C for 30 minutes is 10 µg/g or less.

2. The double-sided pressure-sensitive adhesive sheet according to claim 1, wherein the release liner has a thickness of 35 µm or more.

3. The double-sided pressure-sensitive adhesive sheet according to claim 1 or 2, further comprising a release liner being in releasable contact with the second adhesive surface and having a thickness of 25 µm or less.

4. The double-sided pressure-sensitive adhesive sheet according to any one of claims 1 to 3, wherein the substrate film includes an anchoring layer forming the first surface and/or an anchoring layer forming the second surface.

5. The double-sided pressure-sensitive adhesive sheet according to any one of claims 1 to 4, wherein the substrate film has a thickness of 12 µm or less.
